**Europäisches Patentamt**

**European Patent Office**

**Office européen des brevets**

(19)

(11) Veröffentlichungsnummer : **0 454 658 B1**

(12)

# EUROPÄISCHE PATENTSCHRIFT

(45) Veröffentlichungstag der Patentschrift :
09.06.93 Patentblatt 93/23

(51) Int. Cl.⁵ : **B60C 11/00**

(21) Anmeldenummer : **91890064.8**

(22) Anmeldetag : **02.04.91**

(54) **Fahrzeugluftreifen.**

(30) Priorität : **25.04.90 AT 953/90**

(43) Veröffentlichungstag der Anmeldung :
**30.10.91 Patentblatt 91/44**

(45) Bekanntmachung des Hinweises auf die
Patenterteilung :
**09.06.93 Patentblatt 93/23**

(84) Benannte Vertragsstaaten :
**AT DE FR GB IT**

(56) Entgegenhaltungen :
EP-A- 0 268 436
EP-A- 0 367 557
EP-A- 0 412 952
US-A- 1 956 011

(56) Entgegenhaltungen :
PATENT ABSTRACTS OF JAPAN vol. 13, no.
76 (M-800)(3424) 21. Februar 1989 & JP-A-63
275 407 (THE YOKOHAMA RUBBER CO. LTD. )
14. November 1988
PATENT ABSTRACTS OF JAPAN vol. 13, no.
143 (M-811)(3491) 7. April 1989 & JP-A-63 306
903 (BRIDGESTONE CORP. ) 14. Dezember
1988

(73) Patentinhaber : **Semperit Reifen
Aktiengesellschaft
Wienersdorferstrasse 20-24
A-2514 Traiskirchen (AT)**

(72) Erfinder : **Lux, Friedrich, Dipl.-Ing.
Neunkirchner Strasse 24
A-2700 Wiener Neustadt (AT)**

(74) Vertreter : **Vinazzer, Edith
Semperit Reifen Aktiengesellschaft
Patentabteilung Wienersdorferstrasse 20-24
A-2514 Traiskirchen (AT)**

## Beschreibung

Die Erfindung betrifft einen Fahrzeugluftreifen mit einem Laufflächenprofil, welches sich zumindest in einem Umfangsbereich, der durch Quernuten gegliedert ist, aus einer Abfolge von gleichartigen Profilelementen bzw. Basispitches zusammensetzt, wobei die Anzahl unterschiedlicher Umfangslängen der Basispitches mindestens drei beträgt und wobei den Basispitches Nutpitches unterschiedlicher Nutpitchlängen zugeordnet sind. Ein derartiger Reifen ist z.B. durch Patent Abstracts of Japan, vol. 13, No. 76 (M-800) (3424) 21. Febv.89, & JP-A-63275407 (The Yokohama Rubber Co. Ltd.) 14. Nov. 88, bekannt.

Es sind bereits verschiedene Methoden vorgeschlagen worden, mit deren Hilfe das von Fahrzeugluftreifen während des Abrollens entstehende Profilgeräusch angenehmer gestaltet werden soll. So ist es insbesondere in letzter Zeit üblich geworden, die Methode der "Pitchlängenvariation" anzuwenden, bei der aufeinanderfolgenden, gleichartigen Profilelementen unterschiedliche Umfangslängen, auch Pitchlängen genannt, zugeordnet werden. Beispielsweise ist es üblich, drei oder fünf unterschiedliche Pitchlängen zu wählen, deren günstigste Aufeinanderfolge (Pitchfolge) über den Reifenumfang rechnerisch ermittelt wird. Zu diesem Thema existiert auch eine größere Anzahl von Patentliteratur und es wird in diesem Zusammenhang beispielsweise auf die US-A-4 327 792 und die US-A-4 598 748 verwiesen. Die bekannten Methoden gestatten es vor allem, die Amplitude der Grundwelle zu senken und die auftretenden Frequenzen auf ein breiteres Frequenzband zu verteilen. Diesen Optimierungsmethoden sind jedoch insbesondere dadurch Grenzen gesetzt, daß Pitches nicht in beliebiger Länge bzw. Kürze gewählt werden können, da selbstverständlich auch auf andere Profileigenschaften, wie Fahrverhalten, Aquaplaningverhalten usw. geachtet werden muß.

Die Erfindung hat sich nun die Aufgabe gestellt, die bekannten Methoden der Pitchlängenvariation weiterzuentwickeln, um das Profilgeräusch subjektiv und objektiv zu verringern.

Gelöst wird die gestellte Aufgabe erfindungsgemäß dadurch, daß die Anzahl unterschiedlicher Nutpitchlängen mindestens zwei beträgt und kleiner ist als die Anzahl unterschiedlicher Basispitchlängen.

Es hat sich herausgestellt, daß bein ach der Erfindung gestalteten Pitchfolgen bzw. Laufflächenprofilen das Abrollgeräusch merklich verringert bzw. günstig beeinflußt werden kann. Dabei kommt insbesondere zum Tragen, daß durch die besondere Berücksichtigung eines weiteren variierbaren Parameters, nämlich der Nutbreiten, eine zusätzliche Vergleichmäßigung in der Verteilung der Frequenzen im Fequenzspektrum des Abrollgeräusches erzielbar ist. Eine günstige Zuordnung Nutpitch/Basispitch führt weiters dazu, daß bei einer Anzahl von Frequenzen die zugehörigen Amplituden merklich verringert werden können. Überraschenderweise ist es dabei wesentlich, daß die Anzahl unterschiedlicher Nutpitchlängen kleiner ist als die Anzahl unterschiedlicher Basispitchlängen.

Besonders günstige Ausgestaltungen der Erfindung sind in den Unteransprüchen enthalten.

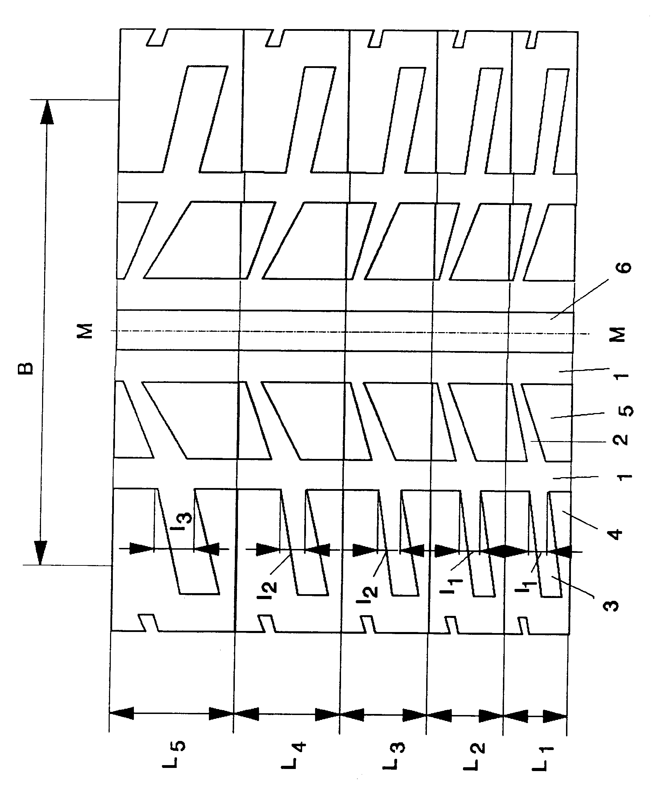

Weitere Merkmale, Vorteile und Einzelheiten der Erfindung werden nun anhand der Zeichnung, die ein Ausführungsbeispiel darstellt, näher beschrieben. Hiebei ist in der einzigen Zeichnungsfigur eine Draufsicht auf eine Teilabwicklung eines Laufflächenprofiles für einen Fahrzeugluftreifen dargestellt.

Das dargestellte Laufflächenprofil setzt sich, wie es allgemein üblich ist, aus einer Vielzahl von in Umfangsrichtung aneinander gereihten gleichartigen Dessinzyklen, auch Pitches genannt, zusammen. Durch Umfangsnuten 1 und diese zumindest teilweise kreuzende Quernuten 2, 3 wird das Laufflächenprofil in Laufflächenbänder, die kontinuierlich bzw. im wesentlichen kontinuierlich umlaufend gestaltet sind, und in Blöcke bzw. Blockreihen gegliedert. Die Breite des Laufflächenprofiles in der Bodenaufstandsfläche ist mit B bezeichnet. Zu den derart festgelegten Laufflächenrandbereichen zu besitzt das Laufflächenprofil je eine Blockreihe 4, an welche, durch eine breite Umfangsnut 1 getrennt, eine weitere Blockreihe 5 anschließt. Entlang der Mittelumfangslinie M-M ist ein Laufflächenband 6 vorgesehen.

Als Gesamtzahl der über den Reifenumfang vorgesehenen Pitches wird üblicherweise eine Anzahl zwischen 40 und 78 gewählt. Dabei werden Pitches mit unterschiedlichen Umfangslängen verwendet, deren günstigste Anordnung bzw. Abfolge (Pitchfolge) über den Reifenumfang mittels eines Rechenprogrammes ermittelt wird.

Die im folgenden genauer erläuterte Erfindung ist auf solche Laufflächenprofilbereiche anwendbar, wo Quernuten verlaufen. Dabei kann das Profil über seine Gesamtbreite, eine Profilhälfte oder ein schmälerer Umfangsbereich, beispielsweise eine Blockreihe, gemeint sein.

Nach der vorliegenden Erfindung setzt sich nun die Pitchfolge aus Basispitches mit mindestens drei unterschiedlichen Pitchlängen zusammen. Gemäß dem dargestellten Ausführungsbeispiel werden Basispitches mit fünf unterschiedlichen Pitchlängen $L_1$, $L_2$, $L_3$, $L_4$ und $L_5$ verwendet, wobei $L_1 < L_2 < L_3 < L_4 < L_5$. Das Verhältnis der Längen von kürzestem Pitch mit der Länge $L_1$ zum längsten Pitch mit der Länge $L_5$ wird zwischen 1:1,4 bis 1:1,6, insbesondere bei etwa 1:1,56, gewählt. Nach der Erfindung beinhalten diese Basispitches Nutpitches, wobei die Anzahl unterschiedlicher Nutpitchlängen kleiner ist als die Anzahl unterschiedlicher Basispitchlängen, jedoch mindestens 2 beträgt. Unter Nutpitchlängen werden hiebei die Quernutbreiten verstanden, die, wie die Zeichnungsfigur zeigt, an einander entsprechend zugeordneten Stellen im Reifenprofil zu ermitteln sind. Im vorliegenden Ausführungsbeispiel sind drei unterschiedliche Nutpitchlängen $l_1$, $l_2$, $l_3$ vorgesehen, wobei $l_1 < l_2 < l_3$. Das Verhältnis der kürzesten Nutpitchlänge zur längsten Nutpitchlänge ist jedenfalls kleiner als das entsprechende Verhältnis der Basispitchlängen und beträgt zwischen 1:1,2 bis 1:1,55, bevorzugt zwischen 1:1,4 und 1:1,5.

Bevorzugt wird jedem Basispitch mit der Länge $L_1$ bis $L_5$ ein bestimmtes Nutpitch mit der Länge $l_1$ bis $l_3$ fix zugeordnet. Diese fixe Zuordnung wird rechnerisch ermittelt, wobei auch die Paarung kleinste Basispitchlänge mit größter Nutpitchlänge auftreten kann, und bleibt innerhalb der Pitchfolge erhalten.

Im Ausführungsbeispiel ist folgende Zuordnung getroffen worden:

$L_1$ mit $l_1$
$L_2$ mit $l_1$
$L_3$ mit $l_2$
$L_4$ mit $l_2$
$L_5$ mit $l_3$

Wird dem kürzesten Pitch mit der Länge $L_1$ bzw $l_1$ die relative Länge 1 zugeordnet, so sind für die weiteren Pitches folgende Relativlängen, jeweils bezogen auf Pitch der Länge $L_1$ bzw. $l_1$ besonders günstig:

| Basispitches Relativlänge | | Nutpitches Relativlänge | |
|---|---|---|---|
| $L_1$ | 1 | $l_1$ | 1 |
| $L_2$ | 1,1 | $l_2$ | 1,17 |
| $L_3$ | 1,21 | $l_3$ | 1,5 |
| $L_4$ | 1,36 | | |
| $L_5$ | 1,56 | | |

Es kann aus Stabilitätsgründen günstig sein, wenn eine Zuordnung kurzes Basispitch zu kurzem Nutpitch bzw. langes Basispitch zu langem Nutpitch bevorzugt wird, auch wenn sich auf das Abrollgeräusch, je nach Pitchfolge, eine abweichende Zuordnung günstiger auswirkt.

In einer Pitchfolge mit fünf unterschiedlichen Basispitchlängen können nach der Erfindung mindestens zwei, und höchstens vier unterschiedliche Nutpitchlängen eingesetzt werden. Beispielsweise ist folgende Zuordnung unter Verwendung von zwei ($l_1'$, $l_2'$) bzw. vier ($l_1''$, $l_2''$, $l_3''$, $l_4''$) Nutpitchlängen günstig, wobei wiederum $l_1' < l_2'$ bzw. $l_1'' < l_2'' < l_3'' < l_4''$:

| | |
|---|---|
| $L_1$ mit $l_1'$ | $L_1$ mit $l_1''$ |
| $L_2$ mit $l_1'$ | $L_2$ mit $l_1''$ |
| $L_3$ mit $l_2'$ | $L_3$ mit $l_2''$ |
| $L_4$ mit $l_2'$ | $L_4$ mit $l_3''$ |
| $L_5$ mit $l_2'$ | $L_5$ mit $l_4''$ |

Im Rahmen der Erfindung können selbstverständlich auch Pitchfolgen mit mehr als fünf unterschiedlichen Basispitchlängen, maximal jedoch zwölf, verwendet werden.

**Patentansprüche**

1. Fahrzeugluftreifen mit einem Laufflächenprofil, welches sich zumindest in einem Umfangsbereich, der durch Quernuten (2,3) gegliedert ist, aus einer Abfolge von gleichartigen Profilelementen bzw. Basispitches (4,5) zusammensetzt, wobei die Anzahl unterschiedlicher Umfangslängen ($L_1$-$L_5$) der Basispitches mindestens drei beträgt, und wobei den Basispitches Nutpitches (2,3) unterschiedlicher Nutpitchlängen ($l_1$-$l_3$) zugeordnet sind, dadurch gekennzeichnet, daß die Anzahl der unterschiedlichen

Nutpitchlängen ($l_1$-$l_2$) mindestens zwei beträgt und kleiner ist als die Anzahl der unterschiedlichen Basispitchlängen ($L_1$-$L_5$).

2. Fahrzeugluftreifen nach Anspruch 1, dadurch gekennzeichnet, daß für eine bestimmte Pitchfolge jeder Basispitchlänge eine bestimmte Nutpitchlänge fix zugeordnet ist.

3. Fahrzeugluftreifen nach Anspruch 1 oder 2, dadurch gekennzeichnet, daß das Verhältnis der Längen kürzestes Nutpitch zu längstem Nutpitch kleiner ist als das Verhältnis der Längen kürzestes Basispitch zu längstem Basispitch.

4. Fahrzeugluftreifen nach einem der Ansprüche 1 bis 3, dadurch gekennzeichnet, daß das Verhältnis der Längen kürzestes Nutpitch zu längstem Nutpitch in einem Bereich zwischen 1:1,2 bis 1:1,55, insbesondere zwischen 1:1,4 und 1:1,5, liegt.

5. Fahrzeugluftreifen nach einem der Ansprüche 1 bis 3, dadurch gekennzeichnet, daß das Verhältnis der Längen kürzestes Basispitch zu längstem Basispitch in einem Bereich zwischen 1:1,4 bis 1:1,6, insbesondere 1:1,56, liegt.

6. Fahrzeugluftreifen nach einem der Ansprüche 1 bis 3, dadurch gekennzeichnet, daß die Anzahl unterschiedlicher Basispitchlängen fünf und die Anzahl unterschiedlicher Nutpitchlängen drei beträgt.

## Claims

1. Pneumatic vehicle tyre, having a tread surface profile which comprises a succession of similar profile elements, or respectively base pitches (4, 5), in at least one circumferential region which is divided-up by transverse grooves (2, 3), the number of different circumferential lengths ($L_1$-$L_5$) of the base pitches being at least three, and groove pitches (2, 3) of variable groove pitch lengths ($l_1$-$l_3$) being associated with the base pitches, characterised in that the number of variable groove pitch lengths ($l_1$-$l_3$) is at least two and smaller than the number of variable base pitch lengths ($L_1$-$L_5$).

2. Pneumatic vehicle tyre according to claim 1, characterised in that a predetermined groove pitch length is fixedly associated with each base pitch length for a predetermined pitch sequence.

3. Pneumatic vehicle tyre according to claim 1 or 2, characterised in that the ratio between the lengths of shortest groove pitch and the lengths of longest groove pitch is smaller than the ratio between the lengths of shortest base pitch and the lengths of longest base pitch.

4. Pneumatic vehicle tyre according to one of claims 1 to 3, characterised in that the ratio between the lengths of shortest groove pitch and the lengths of longest groove pitch in one region is between 1:1.2 and 1:1.55, more especially between 1:1.4 and 1:1.5.

5. Pneumatic vehicle tyre according to one of claims 1 to 3, characterised in that the ratio between the lengths of shortest base pitch and the lengths of longest base pitch in one region is between 1:1.4 and 1:1.6, more especially 1:1.56.

6. Pneumatic vehicle tyre according to one of claims 1 to 3, characterised in that the number of variable base pitch lengths is five, and the number of variable groove pitch lengths is three.

## Revendications

1. Bandage pneumatique de véhicules comprenant un profil de surface de roulement constitué, au moins dans une région périphérique subdivisée par des rainures transversales (2, 3), par une succession d'éléments de profil ou de pas de base (4, 5) de même type, le nombre de longueurs périphériques différentes ($L_1$ - $L_5$) du pas de base étant d'au moins trois, tandis que des pas de rainure (2, 3) de longueurs différentes ($l_1$ - $l_3$) sont associés aux pas de base, caractérisé en ce que le nombre de longueurs de pas de rainure différentes ($l_1$ - $l_2$) est d'au moins deux et est plus faible que le nombre de longueurs de pas de base différentes ($L_1$ - $L_5$).

2. Bandage pneumatique de véhicules selon la revendication 1, caractérisé en ce qu'une longueur de pas de rainure déterminée est associée de façon fixe à une succession de pas déterminée de chaque longueur de pas de base.

3. Bandage pneumatique de véhicules selon la revendication 1 ou 2, caractérisé en ce que le rapport entre les longueurs du pas de rainure le plus court et du pas de rainure le plus long est plus petit que le rapport entre les longueurs du pas de base le plus court et du pas de base le plus long.

4. Bandage pneumatique de véhicules selon l'une quelconque des revendications 1 à 3, caractérisé en ce que le rapport entre longueurs du pas de rainure le plus court et du pas de rainure le plus long est situé dans une fourchette comprise entre 1:1,2 et 1:1,55, et plus particulièrement entre 1:1,4 et 1:1,5.

5. Bandage pneumatique de véhicules selon l'une quelconque des revendications 1 à 3, caractérisé en ce que le rapport entre les longueurs du pas de base le plus court et du pas de base le plus long est situé dans une fourchette comprise entre 1:1,4 et 1:1,6 et est plus particulièrement de 1:1,56.

6. Bandage pneumatique de véhicules selon l'une quelconque des revendications 1 à 3, caractérisé en ce que le nombre des longueurs de pas de base différentes est de cinq et le nombre des longueurs de pas de rainure différentes est de trois.